# EUROPEAN PATENT APPLICATION

(11) **EP 4 838 013 A1**
(43) Date of publication of application: **11.11.2026**
(21) Application number: 26175070.7
(22) Date of filing: 28.04.2026
(51) Int. Cl.: E03D 11/14, E03C 1/322, F16B 7/04

(54) **KIT FOR MOUNTING WALL-HUNG SANITARY FIXTURES AND METHOD**

(30) Priority: 05.05.2025 IT 202500009960
(71) Applicant: Sanitea S.R.L., 05100 Terni (IT)
(72) Inventor: CUCCINIELLO, Daniele, 05100 Terni (IT)
(74) Representative: Mannucci, Michele

(57) **Abstract**

The kit comprises a wall-anchoring pin (3), having a lateral cavity with a surface inclined with respect to a longitudinal axis of the anchoring pin. The kit also comprises a sleeve (5) adapted to be fastened to a toilet bowl and having a longitudinal hole for inserting the pin (3), and a transverse threaded hole. The sleeve may be temporarily fastened to the sanitary fixture using a fastening element of the sleeve to the toilet bowl. A threaded member (7) is adapted to be screwed into the transverse threaded hole of the sleeve. The transverse threaded hole has an axis inclined with respect to the longitudinal hole of the sleeve by an angle smaller than 90°, or smaller than 88°.

## Description

### TECHNICAL FIELD

The present invention relates to the field of systems and kits for mounting objects to be hung on load-bearing structures, for example a wall, in particular systems for mounting wall-hung sanitary fixtures. More specifically, the embodiments described herein relate to kits for mounting wall-hung toilet bowls, i.e., wall-hung WC.

The invention also relates to a method for mounting hanging sanitary fixtures, typically toilet bowls, i.e., WC.

### BACKGROUND ART

For the wall-mounting of wall-hung sanitary fixtures special brackets according to the applicable UNI standards for positioning and anchoring the fixture are mounted on the wall concerned. Such brackets terminate with threaded bars which interact with the wall-hung sanitary fixture.

The mounting systems or kits consist of several modular elements.

One of these is an anchoring pin, usually made of steel, which should be applied on the threaded bars. The wall-hung sanitary fixture is fastened to the anchoring pin through special components which are part of the mounting kit. Various mounting systems and kits are disclosed in EP2857604, DE202009014171, DE201310112005, EP1338711, EP2847393, WO2019020216.

WO2019020216 discloses a fixing kit which comprises, besides the wall-anchoring pin, a sleeve adapted to be fastened to a toilet bowl to be hung. The sleeve comprises a longitudinal hole for inserting the pin, and a transverse threaded hole. The sleeve is fastened to a recess or seat of the toilet bowl to be hung through a fastening element of the sleeve. The fastening element typically consists of a threaded device which is mounted coaxially to the sleeve. The sleeve is locked in the seat or recess of the toilet bowl through the fastening element which, thanks to the threading thereof, may be adapted to the thickness of the rear wall, also called shoulder, of the sanitary fixture. Furthermore, the kit comprises a threaded member adapted to be screwed into the transverse threaded hole of the sleeve and having a longitudinal axis, a first end configured to be engaged by an operating tool, and a second end configured to press against the inclined surface of the cavity of the pin. In order to fasten the sanitary fixture against the wall, the pin fastened to the wall has a lateral cavity having a surface inclined with respect to a longitudinal axis of the anchoring pin, with which the second end of the threaded member cooperates. By screwing the threaded member into the transversal hole of the sleeve, a traction force is exerted which, through the sleeve, pushes the sanitary fixture against the mounting wall. The operation of the threaded member is typically carried out through a lateral hole provided for this purpose in the body forming the sanitary fixture. This hole remains visible after installation and is usually closed with a plug. In other applications, the operation of the threaded member may be carried out from the bottom, using a hexagonal tool with a guide barrel.

There are several mounting kits which use a pin with an inclined cavity and a sleeve with a threaded member cooperating with the inclined cavity and having, in mounted configuration, an axis orthogonal to the axis of the anchoring pin. The various kits differ from each other for the type of fastening elements, with which the sleeve is anchored in its seat or recess formed in the sanitary fixture.

The wall-hung sanitary fixtures, typically the toilet bowls or wall-hung WC, have two upper holes for fixing the toilet bowl cover. These holes are arranged at a certain distance from the rear wall which, in mounted configuration, is in abutment against the mounting wall. This distance is necessary so that the toilet bowl cover can be arranged in a stable raised position. It is not possible to arbitrarily move the mounting holes of the toilet seat closer to the rear wall of the sanitary fixture. Nor is it possible to arbitrarily extend the anchoring pin and the sleeve, as this would compromise the stability and load-bearing capacity of the wall-hung toilet. Furthermore, the seats or recesses intended for installing the fastening systems have limited dimensions and therefore do not allow the use of wall anchoring pins of sufficient length to use the toilet seat mounting holes as access holes for the operating tool used to tighten the screw element acting on the anchoring pin.

For this reason, the use of the toilet seat mounting holes as access holes for inserting the tightening tool of the screw element is currently uncommon. For this purpose, specially provided lateral holes are generally used in each side wall of the sanitary fixture to be hung, or the screw elements are operated by means of a tool inserted from below upwards through an opening in the recess in which the sleeve is housed, through which the wall anchoring pin is inserted. This method makes the installation of the sanitary fixture very complex and time-consuming.

It would be beneficial to provide a kit for mounting wall-hung toilet bowls which allows an easier mounting while offering a firm anchoring of the toilet bowl to the installation wall.

### SUMMARY

Substantially, according to the present invention, a mounting kit is provided for wall-hung toilet bowls comprising: a wall-anchoring pin, comprising a lateral cavity having surface inclined with respect to a longitudinal axis of the anchoring pin; a sleeve adapted to be fastened to a toilet bowl, wherein the sleeve comprises a longitudinal hole for inserting the pin, and a transverse threaded hole; an element for fastening the sleeve to the toilet bowl; a threaded member adapted to be screwed into the transverse threaded hole of the sleeve and having: a longitudinal axis, a first end configured to be engaged by an operating tool, and a second end configured to press against the inclined surface of the lateral cavity of the pin. Characteristically, the transverse threaded hole has an axis inclined with respect to the longitudinal hole by an angle smaller than 90°, or smaller than 89°.

Unlike the mounting kits of the prior art, the axis of the threaded hole is not orthogonal to the axis of the longitudinal hole but forms an angle smaller than 90°. Such angle is measured on the side of the sleeve opposite to the side one facing towards the wall for installing the sanitary fixture. The inclination of the threaded hole is such that, when the sleeve is installed on the sanitary fixture, the threaded member is oriented with its first end toward the front portion of the fixture, that is, opposite to the rear wall of the fixture which, in the installed configuration, is in contact with the installation wall.

Due to this inclination, the first end of the threaded member may be reached by an operating tool through the respective fixing hole of the toilet bowl cover. Given this solution, the sanitary fixture, typically a wall-hung WC does not require the presence of holes designated for the through-passing of the operating tool used to tighten the threaded member. Once installed, the sanitary fixture is therefore free of plugs or other features usually required to conceal or cover the holes for access to the threaded member. At the same time, mounting is much easier and quick given that there is no need for acting from the bottom with the operating tool, in an area not visible to the operator and difficult to reach.

The mutual inclination between the axis of the threaded member and the axis of the longitudinal hole of the sleeve (and therefore of the pin inserted thereinto) is selected, as a function of the inclination of the surface of the lateral cavity formed in the pin such to obtain, by screwing the threaded member, a force on the sanitary fixture which has a sufficient component in the longitudinal direction, to push the sanitary fixture with its rear wall against the wall on which the sanitary fixture is mounted.

Further advantageous features and embodiments of the mounting kit according to the present invention are set forth in the appended claims and described below with reference to the attached drawings, which show a mounting kit by way of example.

The invention also relates to a system comprising a wall-hung sanitary fixture, that is of the wall-mounted hanging type, typically a toilet bowl or WC, and a pair of mounting kits as defined above.

According to still a further aspect, herein disclosed is a method for wall-mounting a wall-hung toilet bowl with a pair of mounting kits as defined above. The method comprises the following steps:
fastening the sleeve of each mounting kit in a respective seat of a toilet bowl to be mounted aligned with a respective through hole formed in a rear wall of the toilet bowl, in the transverse threaded hole of each sleeve, there being partially screwed the respective threaded member;
mounting the anchoring pins, with the lateral cavities facing upwards, on an installation wall;
approaching the toilet bowl to the installation wall by inserting each anchoring pin through the through hole of the toilet bowl and into the longitudinal hole of the sleeve;
inserting an operating tool through each fixing hole of the toilet bowl cover and screwing the respective threaded member against the inclined surface of the respective lateral cavity of each anchoring pin.

### BRIEF DESCRIPTION OF THE DRAWINGS

The invention will be clearer from the description and the attached drawings, which illustrate embodiments of the invention provided by way of non-limiting example. More particularly, in the drawings:
Fig.1 is an exploded cross-sectional view of a mounting kit according to the invention;
Fig.2 is an axonometric view of an installation wall with partially mounted accessories;
Figs.3 and 4 are steps for approaching a bow to the installation wall;
Fig.5 is a cross-section according to a vertical plane, orthogonal to the installation wall, of a toilet bowl in an intermediate installation step;
Fig.6 is an enlargement of a detail of Fig.5;
Fig.7 is a view according to VII-VII of Fig.5; and
Fig.8 is a cross-section similar to the cross-section of Fig.6 with the toilet bowl mounted and provided with a toilet bowl cover.

### DETAILED DESCRIPTION

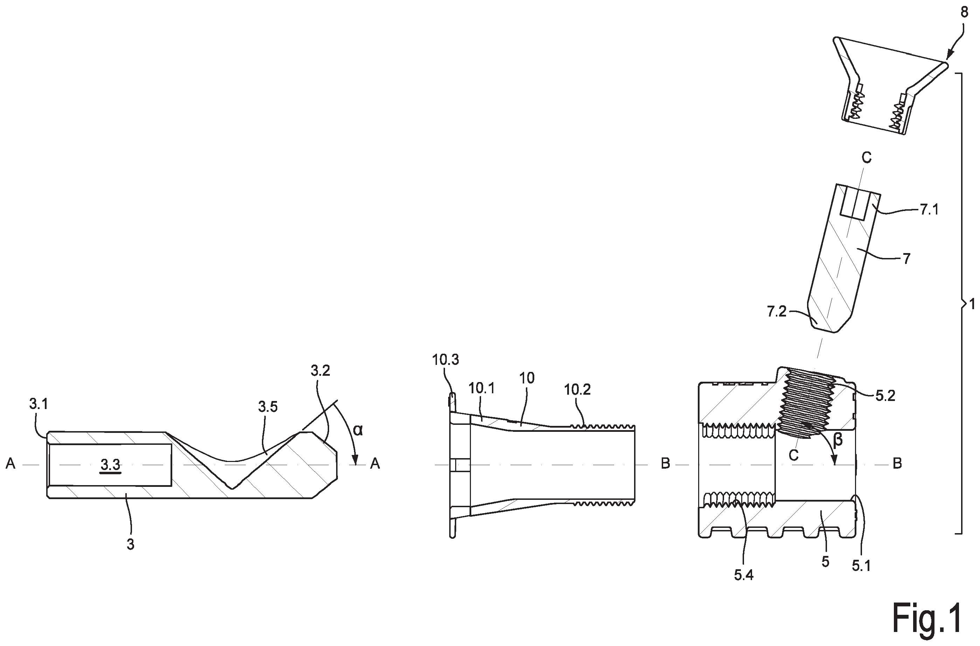

Fig.1 shows an exploded view of the components of a mounting kit according to the invention. Generally, the mounting of a wall-hung toilet bowl requires the use of two identical mounting kits.

The mounting kit 1 comprises a wall-anchoring pin 3. The wall-anchoring pin 3 comprises a first end 3.1, hereinafter referred to as proximal end, and a second end 3.2, hereinafter referred to as distal end. A threaded blind hole 3.3 extends from the proximal end 3.1 and terminates at a distance from the distal end 3.2. The latter is preferably conical for the purposes clarified below.

A flared lateral cavity 3.5 is provided on the approximately cylindrical outer surface of the wall-anchoring pin 3. In the illustrated embodiment, the lateral cavity or inclined groove 3.5 is symmetrical, but this is not indispensable. The lateral cavity 3.5 has a bottom surface inclined by an angle α with respect to a longitudinal axis A-A of the wall-anchoring pin 3. The angle α may be comprised between 20° and 60°, or between 30° and 40°, for example.

In advantageous embodiments, the wall-anchoring pin 3 is made of metal material, for example steel, to ensure a high mechanical strength.

The mounting kit 1 further comprises a sleeve 5, designed to be fastened to a toilet bowl to be hung. The sleeve 5 may be made of polymeric material, possibly reinforced with fibres.

The sleeve 5 comprises a longitudinal hole 5.1 with an axis B-B. The longitudinal hole 5.1 is preferably a through hole. The longitudinal hole 5.1 advantageously has an inner diameter equal to or slightly larger than the outer diameter of the cylindrical portion of the wall-anchoring pin 3, so that the latter can be inserted into the longitudinal hole 5.1 with ease but with clearance that is limited as much as possible.

for A transverse threaded hole 5.2. is provided in the sleeve. The transverse threaded hole has an axis C-C inclined by an angle β with respect to the axis B-B of the longitudinal hole 5.1. The angle β is smaller than 90° and it may be for example comprised between 89° and 43°, or between 87° and 43°, or between 87° and 55°. It shall be understood that the values are provided by way of example. The present description explicitly comprises not only the angular ranges expressly mentioned above, but any other sub-range between the values mentioned above.

In some embodiments, the axis C-C of the transverse threaded hole 5.2 may have an inclination with respect to the axis A-A of the longitudinal hole 5.2 which ranges between 87° and (8° + α), where α is the angle between the axis A-A of the wall-anchoring pin 3 and the inclined surface of the lateral groove 3.5 of the wall-anchoring pin 3.

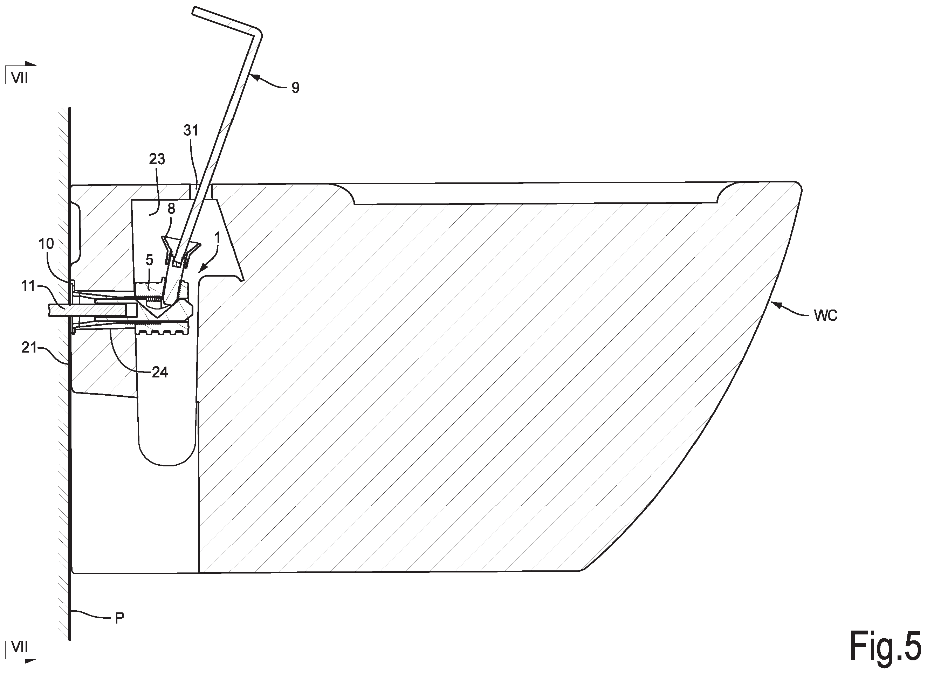

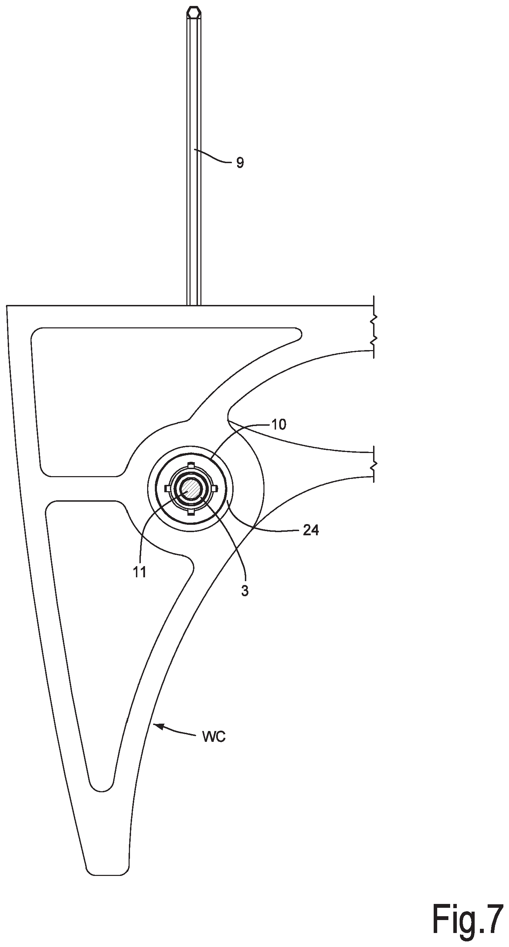

The mounting kit 1 further comprises a threaded member 7, adapted to be screwed into the transverse threaded hole 5.2. The threaded member 7 has a first end 7.1 configured to cooperate with an operating tool 9 (see Figs.5, 6, 7), and a second end 7.2. When the threaded member 7 is screwed into the transverse threaded hole 5.2 of the sleeve 5, its second end 7.2 is faced towards the flared lateral cavity 3.5 of the wall-anchoring pin 3 inserted into the longitudinal hole 5.1 of the sleeve 5, as clarified below. The configuration is such that, by screwing the threaded member 7 into the transverse hole 5.2 of the sleeve 5, a thrust force is generated as a result of the interaction between the threaded member 7 and the wall-anchoring pin 3, thereby pushing the sanitary fixture on which the sleeve 5 is mounted toward the installation wall..

In some embodiments, a guide funnel 8 is associated with the first end 7.1 of the threaded member 7, which serves to facilitate the coupling between the threaded member 7 and the operating tool 9, as described below.

The mounting kit 1 further comprises a fastening element 10, which serves to fasten the sleeve 5 to the sanitary fixture to be hung. In the illustrated embodiment, the fastening element 10 comprises a conical portion 10.1 and a threaded tang 10.2, configured to be screwed into a threaded portion 5.4 of the longitudinal hole 5.1 of the sleeve 5. The conical portion 10.1 of the fastening element 10 further comprises a flange 10.3, adapted to cooperate with the rear surface of the bowl to be hung, as clarified below.

The mounting of a wall-hung sanitary fixture, typically a WC, thus is a hanging toilet bowl, by means of a pair of mounting kits 1 as described above is carried out as follows, with reference to Figs..2 to 8.

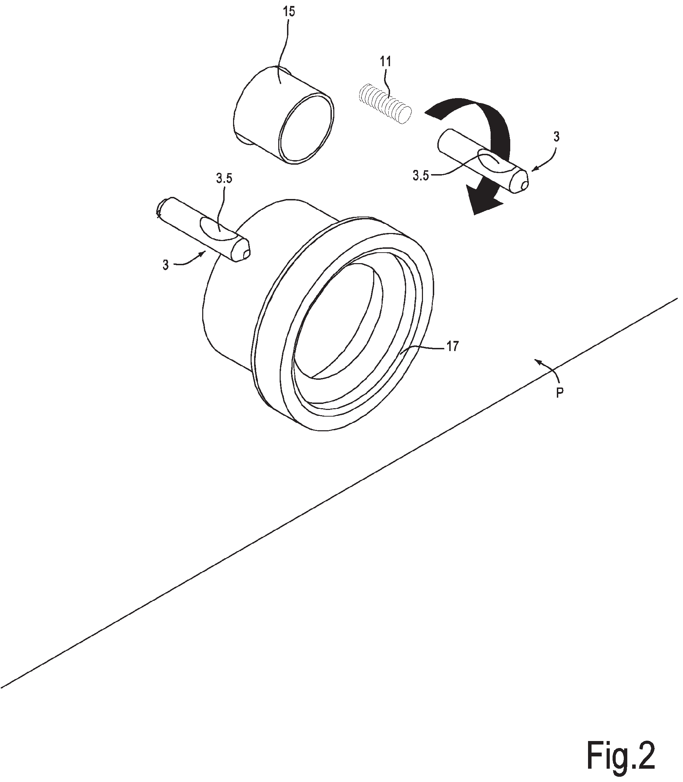

Fig.2 shows a wall P from which two threaded bars protrude, on which two wall anchoring pins 3 of two mounting kits 1 are screwed. In Fig.2, one of the two wall-anchoring pins 3 is already screwed on the respective threaded bar (not shown), while the other wall anchoring pin 3 of the other mounting kit is shown aligned to the respective threaded bar 11 protruding from the installation wall P. Reference numeral 15 indicates the flush water supply duct, from a reservoir recessed in the wall P, for example, not shown. With 17 there is shown a discharge duct.

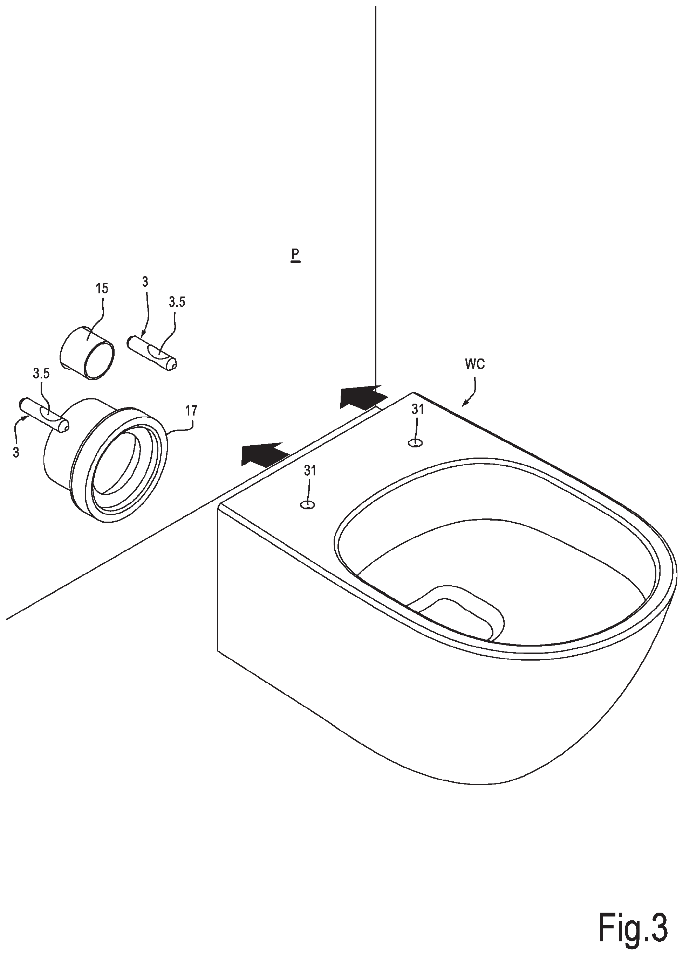

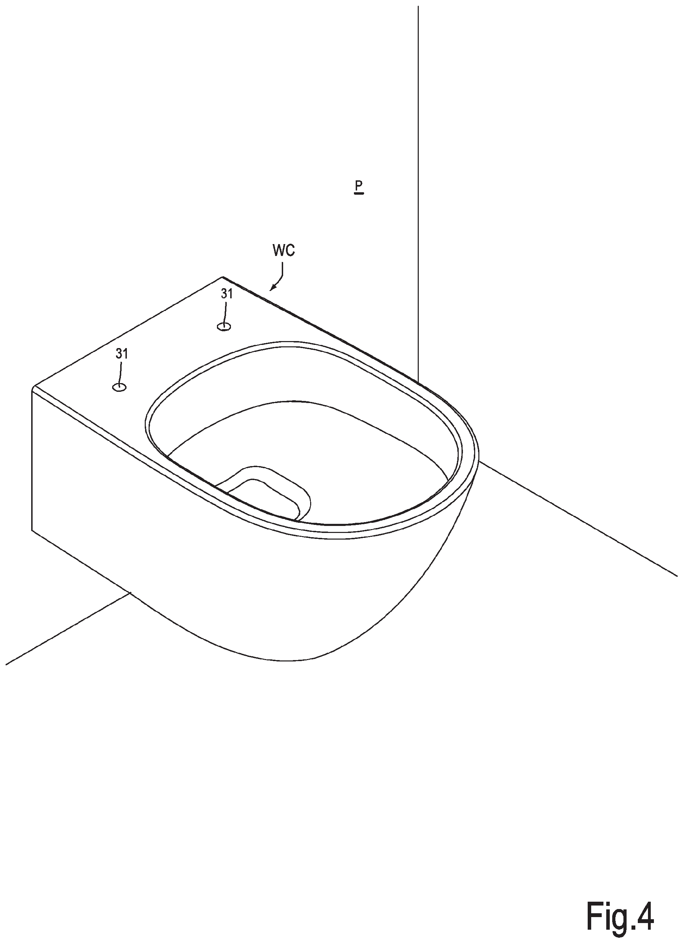

The steps for approaching the sanitary fixture, typically a toilet bowl, to the installation wall P, are shown in Figs. 3 and 4. To this end, as clarified below, the toilet bowl has a rear wall or shoulder 21 (see Fig. 5) with holes 24, through which the wall anchoring pins 3, previously mounted on the threaded bars 11, are inserted. This operation is carried out after the wall anchoring pins 3 were screwed by the required amount on the threaded bars 11 and positioned with the lateral cavities 3.5 facing upwards. The conical distal ends 3.2 of the wall anchoring pins 3 facilitate the insertion of the wall anchoring pins 3 into the holes of the toilet bowl.

Before bringing the toilet bowl close to the installation wall P, the respective sleeves 5 have been fastened, by means of the fastening elements 10, in two recesses or seats 23 formed in the ceramic material that makes up the toilet bowl. In the illustrated embodiment, the fastening elements 10 are in the form of cones which pass through the holes 24 formed in the rear wall or shoulder 25 of the toilet bowl and which are screwed into the threaded portion 5.4 of the longitudinal hole 5.1 of the respective sleeve 5. The flange 10.3 of each fastening element 10 locks the fastening element 10 and the sleeve 5 onto the toilet bowl.

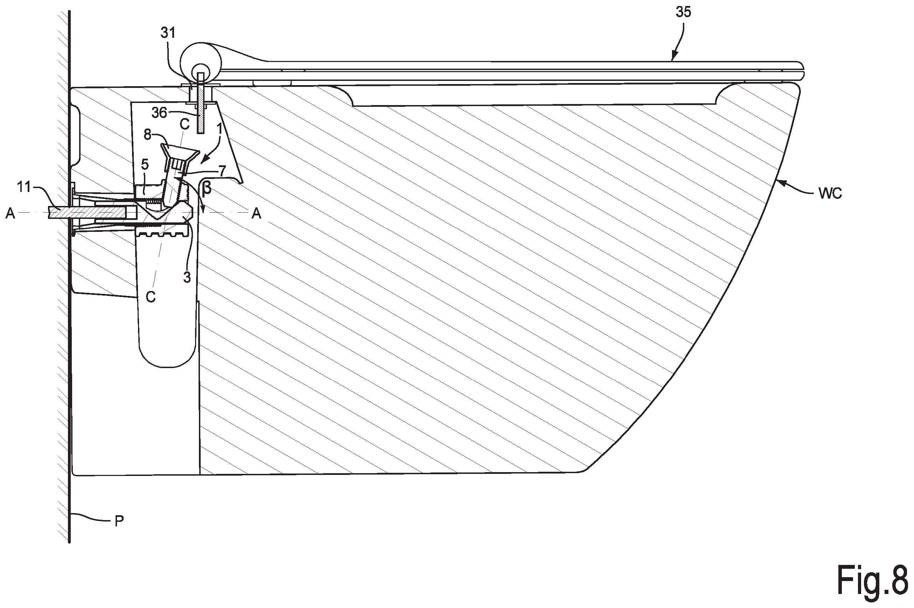

Each sleeve 5 is integrally joined with the toilet bowl through the respective fastening element 10 placing the sleeve 5 with the transverse threaded hole 5.2 oriented upwards with respect to the toilet bowl and more precisely oriented towards a hole 31 for fixing a toilet bowl cover 35 (Fig. 8). Specifically, the toilet bowl has two holes 31 for fixing the toilet bowl cover 35, one at each seat or recess 23.

In other embodiments, the fastening elements 10 may be configured differently, as described in the prior art documents mentioned above.

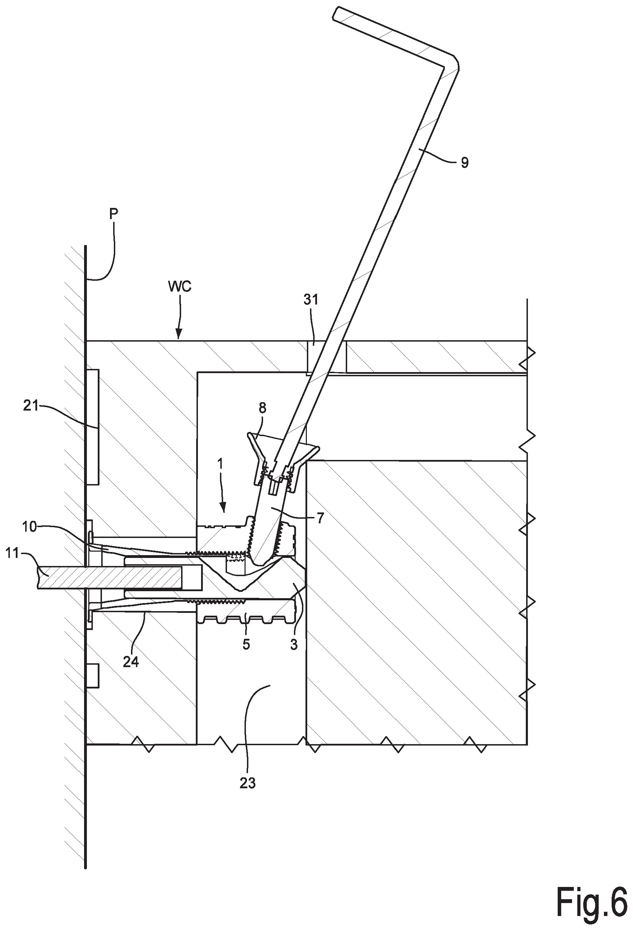

As visible in particular in Fig. 5 and 6, the holes 31 for fixing the toilet bowl cover are arranged in a more advanced position with respect to the threaded members 7, that is at a greater distance from the rear wall or shoulder 21 of the toilet bowl and therefore from the installation wall P. The position of the holes 31 for fixing the toilet bowl cover 35 is selected so that, in the lifted position, the toilet bowl cover 35 may be sufficiently inclined with respect to the vertical to remain stable in the open position.

In order to install the toilet bowl easily, advantageously the two threaded members 7 are partially screwed into the transversal threaded holes 5.2 of the sleeves 5 before the latter are fastened into the respective seats or recesses 23.

As shown in Figs. 5 and 6, the toilet bowl is mounted by introducing the anchoring pins 3 into the holes 24 of the rear wall or shoulder 25 of the toilet bowl through a longitudinal passage formed in the respective fastening element 10, and then making them penetrate into the longitudinal holes 5.1 of the respective sleeves 5. In the inserted configuration, the flared lateral cavities are facing the ends 7.2 of the respective threaded members 7. Figs. 5 and 6 also show how the wall anchoring pins 3 are screwed on the respective threaded bars 11 in a position such to correctly position the flared lateral cavities 3.5 facing the ends 7.2 of each threaded member 7.

Using the operating tool 9, the operator may tighten the toilet bowl against the installation wall P. This occurs by introducing the operating tool 9 through one and then the other of the holes 31 for fixing the toilet bowl cover 35. The operating tool 9 can reach with its end the first end 7.1 of the respective threaded member 7 due to the inclination of the axis C-C of the latter with respect to the direction orthogonal to the axis B-B of the longitudinal hole 5.1 of the sleeve 5 and therefore to the axis A-A of the wall-anchoring pin 3. The respective guide funnel 8 allows to facilitate the coupling between the operating tool 9 and the end 7.1 of the threaded member 7, the end 7.1 being shaped to be torsionally coupled to the operating tool 9 and allow the rotation of the threaded member 7 using the operating tool 9.

By screwing each threaded member 7 into the respective transverse threaded hole 5.2 of the corresponding sleeve 5 by means of the operating tool 9, a thrust is generated by the end 7.2 of the threaded member 7 against the inclined surface of the lateral inclined cavity 3.5. This thrust produces a tensile force on the wall anchoring pin 3 and consequently pushes the toilet bowl against the installation wall P.

Upon completing this operation, a toilet bowl cover 35 may be installed using mounting screws 36, which are engaged in the respective holes 31 for fixing the toilet bowl cover 35, see Fig.8.

The mounted toilet bowl is therefore free of visible holes and it does not require the application of plugs for closing such holes, which are instead present in the conventional sanitary fixtures, typically on the sides of the sanitary fixture. At the same time, there is no need to introduce the operating tool from the bottom upwards, with long and complex operations. On the contrary, the threaded member can be easily reached from the top through the fixing holes of the toilet bowl cover. The operator can easily access the threaded member without having to assume uncomfortable positions and, above all, while being able to visually monitor the movement of the operating tool and thus engage it easily with the screw element.

The wall anchoring pins 3 and the sleeves 5 have a limited length, and this offers a high stability and resistance to the load of the wall-hung sanitary fixture and it avoids interferences with the ceramic material that forms the toilet bowl. The mounting kit 1 does not interfere with other parts or components of the toilet bowl and it is easily mounted using the holes 31 for fixing the toilet bowl cover 35, due to inclination by an angle different from 90° of the axis C-C of the threaded member 7 with respect to the axis B-B of the sleeve 5, coinciding with the axis A-A of the wall-anchoring pin 3.

The mounting kit may also be used according to standard methods, by acting from the bottom or using lateral holes of the sanitary fixture, for example when the sanitary fixture is not a toilet bowl (provided with holes for mounting the toilet bowl cover) but rather, for example, a bidet. Therefore, the mounting kit can be used in a flexible manner for various uses even where the inclination of the transverse threaded hole is not mandatory. The inclination of the axis of the transversal hole with respect to a direction orthogonal with respect to the wall-anchoring pin 3 is limited, so as not to jeopardise the use through an operating tool inserted from the bottom or laterally.

## Claims

1. A mounting kit, for wall-hung toilet bowls, comprising:
a wall-anchoring pin, comprising a lateral cavity having a surface inclined with respect to a longitudinal axis of the anchoring pin;
a sleeve adapted to be fastened to a toilet bowl, wherein the sleeve comprises a longitudinal hole for the insertion of the pin, and a transverse threaded hole;
an element for fastening the sleeve to the toilet bowl;
a threaded member adapted to be screwed into the transverse threaded hole of the sleeve and having a longitudinal axis, a first end configured to be engaged by an operating tool, and a second end configured to press against the inclined surface of the cavity of the pin;
wherein the transverse threaded hole has an axis inclined with respect to the longitudinal hole by an angle smaller than 90° or smaller than 88°.

2. The mounting kit of claim 1, wherein the inclined wall of the cavity of the anchoring pin has an inclination comprised between 20° and 60°, or between 30° and 40° with respect to a longitudinal axis of the pin.

3. The mounting kit of claim 1 or 2, wherein the transverse threaded hole has an inclination with respect to the axis of the longitudinal hole of the sleeve comprised between 89° and 43°, or between 87° and 43°, or between 87° and 55°.

4. The mounting kit of claim 1, 2 or 3, wherein the axis of the transverse threaded hole has an angle, with respect to the axis of the longitudinal hole of the sleeve is comprised between 87° and (8°+α), where α is the angle formed between the axis of the wall-anchoring pin and the inclination of the inclined surface of the lateral cavity of the wall-anchoring pin.

5. The mounting kit of any one of the preceding claims, further comprising a guide funnel adapted to be coupled to the first end of the threaded member.

6. The mounting kit of any one of the preceding claims, wherein the anchoring pin comprises a blind threaded hole extending from a first end of the threaded pin towards a second end of the anchoring pin, and wherein the lateral cavity is located between the second end of the anchoring pin and a bottom of the threaded blind hole.

7. A system comprising a hanging toilet bowl and two mounting kits according to one or more of the preceding claims.

8. The system of claim 7, wherein the toilet bowl comprises upper holes for fixing a toilet bowl cover.

9. The system of claim 8, comprising two seats for housing sleeves of the mounting kit; wherein each seat has a through hole on a rear wall of the toilet bowl, through which the anchoring pins can be inserted; wherein each seat is located under the respective fixing hole of the toilet bowl cover.

10. The system of claim 9, wherein in the mounted configuration, each threaded member, inserted into the transverse threaded hole of each sleeve is accessible using an operating tool through the respective fixing hole of the toilet bowl cover.

11. A method for wall-mounting a wall-hung toilet bowl with a pair of mounting kits according to one or more of claims 1 to 6, comprising the following steps:
fastening the sleeve of each mounting kit in a respective seat of a toilet bowl to be mounted aligned with a respective through hole formed in a rear wall of the toilet bowl, , the respective threaded member being partially screwed in the transverse threaded hole of each sleeve;
mounting the anchoring pins, with the lateral cavities facing upwards, on an installation wall;
approaching the toilet bowl to the installation wall by inserting each anchoring pin through the through hole of the toilet bowl and into the longitudinal hole of the sleeve;
inserting an operating tool through each fixing hole of the toilet bowl cover and screwing the respective threaded member against the inclined surface of the respective lateral cavity of each anchoring pin.

12. The method of claim 11, comprising the step of mounting on each threaded member a guide funnel and coupling the operating tool to the threaded member using the guide funnel.
